# EUROPÄISCHE PATENTSCHRIFT

(11) **EP 1 698 839 B1**
(45) Veröffentlichungstag und Bekanntmachung des Hinweises auf die Patenterteilung: **05.08.2015**
(21) Anmeldenummer: 06000782.0
(22) Anmeldetag: 14.01.2006
(51) Int. Cl.: F24H 1/38, F28F 3/04, F28F 21/00, F28D 21/00, F28D 9/00, F24H 8/00

(54) **Heizkessel**
Boiler
Chaudière

(30) Priorität: 12.02.2005 DE 202005002261 U
(43) Veröffentlichungstag der Anmeldung: 06.09.2006
(73) Patentinhaber: August Brötje GmbH, 26180 Rastede (DE)
(72) Erfinder: Wilken, Hajo, 26215 Wiefelstede (DE)
(74) Vertreter: Jabbusch, Matthias

(56) Entgegenhaltungen:
- EP-A- 0 945 688
- EP-A- 0 965 802
- EP-A- 1 184 628
- EP-A- 1 650 505
- DE-U1- 29 800 377
- GB-A- 2 403 790
- US-A1- 2003 145 979
- US-B1- 6 470 835

## Beschreibung

Die Erfindung bezieht sich auf einen Heizkessel, mit einem Ölbrenner, mit einer vom Ölbrenner befeuerten Brennkammer, deren Wandflächen in vorbestimmten Bereichen einerseits mit in der Brennkammer vom Ölbrenner erzeugtem Brenngas und andererseits mit dem jeweiligen Heizmedium beaufschlagt sind und mit einer das Brenngas aus der Brennkammer ableitenden Abgasleitung, von der zumindest ein Abschnitt als Plattenwärmetauscher ausgebildet ist, der vom Heizmedium einerseits und von aus der Brennkammer abgeleitetem Brenngas andererseits beaufschlagte Tauscherflächen aufweist, und innerhalb eines Verkleidungsgehäuses des Heizkessels angeordnet ist, wobei der Werkstoff für den Plattenwärmetauscher korrosionsbeständiger Edelstahl ist.

Ein Heizkessel dieser Gattung ist in GB 2 403 790 A bekannt.

Der Erfindung liegt die Aufgabe zugrunde, bei einem Heizkessel der vorbezeichneten Art einen Brennwertbetrieb zu ermöglichen.

Diese Aufgabe ist erfindungsgemäß durch die Merkmale des Schutzanspruchs 1 gelöst. Weiterbildungen der Erfindung sowie vorteilhafte Ausgestaltungen ergeben sich aus dem Unteranspruch 2.

Ein Heizkessel der eingangs bezeichneten Gattung zeichnet sich dadurch aus, dass der Plattenwärmetauscher als ein im Gegenstrom betriebener Plattenwärmetauscher ausgebildet ist, dass einander innerhalb des Plattenwärmetauschers zugekehrte Tauscherflächen an wenigstens einer ihrer von Heizmedium beaufschlagten Seiten erhaben vorstehende Leitelemente aufweisen, wobei jedes Leitelement eine durch Druckformen hergestellte, wulstartige Erhebung ist, durch die einerseits ein wendel- bzw. mäanderförmiger Zwangsweg für das Heizmedium und andererseits eine sich kreuzende Form der Heizmediumkanäle ausgebildet ist.

Durch diese Ausbildung eines Abschnittes der von der Brennkammer abgehenden Abgasleitung als Wärmetauscher, ist bei dem erfindungsgemäßen Heizkessel ein zusätzlicher Wärmetauscher vorhanden, der als sogenannter *"Sekundärwärmetausche* die bereits in der Brennkammer, die auch als Primärwärmetauscher bezeichnet werden kann, zwecks Wärmeübertragung an das Heizmedium genutzte Abgase noch weiter ausnutzt und dabei herunterkühlt, bevor die endgültige Ableitung in den Abgaskamin erfolgt.

Mit dem zusätzlichen Wärmetauscher erfolgt die weitere Nutzung des Wärmeinhaltes der Brenngase derart, daß der in ihnen enthaltene Wasserdampf kondensiert. Die dabei freigesetzte Kondensationswärme wird von dem zusätzlichen Wärmetauscher, zu dem der vorbestimmte Abschnitt der Abgasleitung ausgebildet ist, an das Heizmedium abgegeben. Das Heizmedium ist somit bereits vorgewärmt, wenn es den Wandflächen der Brennkammer zuströmt, um dort weitere Wärme aufzunehmen, bevor es über eine Vorlaufleitung den jeweiligen Wärmenutzungen, z. B. für Heizzwecke oder Erwärmung von Trinkwasser, zugeleitet wird.

Durch diese Ausnutzung der Kondensationswärme der Abgase ist der sogenannte Brennwertbetrieb des Öl-Heizkessels gegeben. Mit einem Ölbrenner befeuerte Heizkessel arbeiten im Brennwertbetrieb wirtschaftlicher.

Dadurch, daß ein Bereich des Abgaswegs, der innerhalb des Heizkessels liegt, als zusätzlicher, sekundärer Wärmetauscher ausgebildet ist, ergibt sich eine vorteilhaft kompakte Bauweise des erfindungsgemäßen Heizkessels. Der Heizkessel mit seinen Wärmetauschern ist eine bauliche Einheit, bei der sämtliche Bauelemente innerhalb eines Gehäuses untergebracht sind, welches im wesentlichen nur noch wenige äußere Anschlüsse aufweist, insbesondere für Heizungsvorlauf und Heizungsrücklauf, sowie den Anschluß an den Abgaskamin, über den auch gegebenenfalls die Frischluftzuführung erfolgen kann und einen Anschluß für einen Kondenswasserablauf.

Bei dem erfindungsgemäßen Kessel treten geringere Verschmutzungen auf, da Verbrennung und Kondensation räumlich getrennt voneinander ablaufen. Die entstehenden Verbrennungsrückstände, die auch die Reaktionsprodukte des im Öl enthaltenen Schwefels enthalten, lagern sich hauptsächlich an den Wärmetauscherflächen der Brennkammer ab. Dort entsteht aber aufgrund der angepaßten Temperaturführung im Kessel kein Kondenswasser. Erst in dem Abschnitt der Abgasleitung, der als Kondensationswärmetauscher ausgebildet ist, findet dann aufgrund der räumlichen Trennung ein praktisch ablagerungsfreier Kondensationsprozeß statt, so daß der hohe Schwefelgehalt des Standardheizöls keine besondere Belastung für den Brennwertbetrieb des Heizkessels mit sich bringt.

Einer kompakten Bauweise mit vorteilhaft geringen Abmessungen ist bei dem Heizkessel auch förderlich, daß der als zusätzlicher Wärmetauscher ausgebildete Abschnitt der Abgasleitung als Plattenwärmetauscher ausgebildet ist. Plattenwärmetauscher weisen im Verhältnis zu ihrer Dimensionierung der äußeren Abmessungen relativ hohe Leistungen auf, weil größere Heizflächen realisierbar sind. Vor allem können Plattenwärmetauscher durch einfaches Vervielfachen oder Vermindern der Anzahl der miteinander zusammenwirkenden Wärmetauscherplatten hinsichtlich der Gesamtleistung auf einfachste Weise leistungsmäßig verändert werden.

Plattenwärmetauscher sind verhältnismäßig einfach zu montieren, da sie lediglich aus im wesentlichen baugleichen Tauscherplatten zusammenzusetzen sind. Die einzelnen Platten sind aus geeigneten Werkstoffen hergestellt, z. B. aus optimale Wärmeleitfähigkeit aufweisendem Metall. Bei dem erfindungsgemäßen Heizkessel ist mit Vorteil als Werkstoff korrosionsbeständiger Edelstahl verwendet. Dieser Werkstoff eignet sich besonders für den Einsatz als Wärmetauscherfläche bei einem Kessel, der mit Öl befeuert wird. Bei dem Plattenwärmetauscher, welcher bei dem erfindungsgemäßen Heizkessel eingesetzt wird, handelt es sich um ein Bauteil, das als komplettes Schweißteil vorliegt, welches aus den Halbschalen bzw. Gliedern je nach erforderlicher Größe zusammengeschweißt wird.

Da die mit Abgas beaufschlagten Wärmetauscherflächen bei einem mit Ölbrenner betriebenen Kessel zu Verschmutzungen neigen, kommt es auf eine leichte Reinigungsmöglichkeit der Abgas führenden Wege an. Bei dem erfindungsgemäßen Kessel ist deshalb vorgesehen, daß der Abstand zwischen einander benachbarten Platten auf der Abgasseite des Wärmetauschers 9 mm bis 20 mm, vorzugsweise 13 mm ist. Bei diesen Abmessungen ist eine Reinigung, wenn sie erforderlich werden sollte, mit einer Haushaltsbürste und einem Spülmittel für den Haushalt auf einfachste Weise möglich.

Bei dem erfindungsgemäßen Heizkessel wird der zusätzliche, sekundäre Wärmetauscher im Gegenstrom betrieben. Dabei tritt der Heizungsrücklauf in einen unteren Teil des Wärmetauschers ein, wird im Gegenstrom von durch den Wärmetauscher strömenden Abgasen erwärmt und wird im oberen Teil den mit Heizmedium beaufschlagten Wandflächen der Brennkammer des Heizkessels und somit dem sogenannten primären Wärmetauscher zugeführt. Dort erhält das Heizmedium die angestrebte Temperatur für den Heizungsvorlauf.

Vom oberen Teil des Wärmetauschers wird das Abgas innerhalb des Gehäuses durch die Spalte zwischen den Wärmetauscherplatten nach unten zum Abgasanschluß geleitet, der mit dem das Abgas abführenden Kamin verbindbar ist.

Das sich im Wärmetauscher bildende Kondenswasser tropft von den Wärmetauscherplatten unten ab und sammelt sich in einem ableitenden Siphon.

Dadurch, daß einander innerhalb des Wärmetauschers zugekehrte Tauscherflächen an wenigstens einer ihrer von Heizmedium beaufschlagten Seiten erhaben vorstehende Leitelemente aufweisen, wird in Strömungsrichtung des Heizmediums im Wärmetauscher ein wendel- oder mäanderförmiger Zwangsweg erzeugt, durch den eine Wärmeübertragung auf "der *Wasserseite"* optimiert wird, was zur Anhebung des Wirkungsgrades führt. Zur Vermeidung von erhöhtem Druckverlust, und zur Beibehaltung einer einfachen Reinigungsmöglichkeit, gibt es bei der jeweils zweiten Halbschale eines aus Halbschalen zusammengesetzten Gliedes des Plattenwärmetauschers eine entsprechend abgewandelte Form von Leitelementen.

Die Leitelemente sind durch Druckverformen, bzw. Prägung der Plattenoberflächen hergestellte wulstartige Erhebungen bzw. Vertiefungen. Geprägte Leitelemente haben den Vorteil, daß sie bereits beim Zuschneiden der Platten durch Stanzen in einem einzigen Arbeitsgang des "*Stanzprägens"* mit ausgeformt werden könnten.

Die Leitelemente bilden auf der Wasserseite die Wasserkanäle, in einer speziellen, sich kreuzenden Form, die jeweils durch die Halbschalen jedes Gliedes bzw. jeder Platte vorgegeben wird.

Eine zweckmäßige und einfache Montage der Platten zu einem aus mehreren Tauscherplatten bestehenden Plattenwärmetauscher wird mit Vorteil dadurch erreicht, daß der Wärmetauscher wenigstens ein die Platten zusammenhaltendes Halteelement aufweist. Dabei sind die Halteelemente als durch die Platten eines Plattenpakets durchlaufende Zuganker ausgebildet. Jeder Zuganker weist Ankerorgane auf, mit welchen er zumindest endseitig an jeweils äußeren Platten eines Plattenpakets verankert ist. Zuganker können z. B. Flansche mit einer zentralen Gewindebohrung sein, die auf jeweils einen als Gewindestange ausgebildeten Zuganker schraubbar sind. Der Zuganker dient zur Gewährleistung der erforderlichen Form- und Druckstabilität. Er wirkt zur Aufnahme der Zugkräfte zwischen der ersten und der letzten Halbschale der aus Halbschalen gebildeten Platten des Plattenwärmetauschers.

Bei entsprechender Ausbildung der Halbschalen, insbesondere ihrer gegenseitigen Anlage- und Verbindungsbereiche, ist auch eine Zusammenfügung ohne Zuganker denkbar.

Ein Ausführungsbeispiel der Erfindung, aus dem sich weitere erfinderische Merkmale ergeben, ist in der Zeichnung dargestellt. Es zeigen:
- Fig. 1: eine Seitenansicht des als Wärmetauscher ausgebildeten Abschnitts der Abgasleitung des Heizkessels, und
- Fig. 2: eine Ansicht des Plattenpakets des Wärmetauschers gemäß Fig. 1.

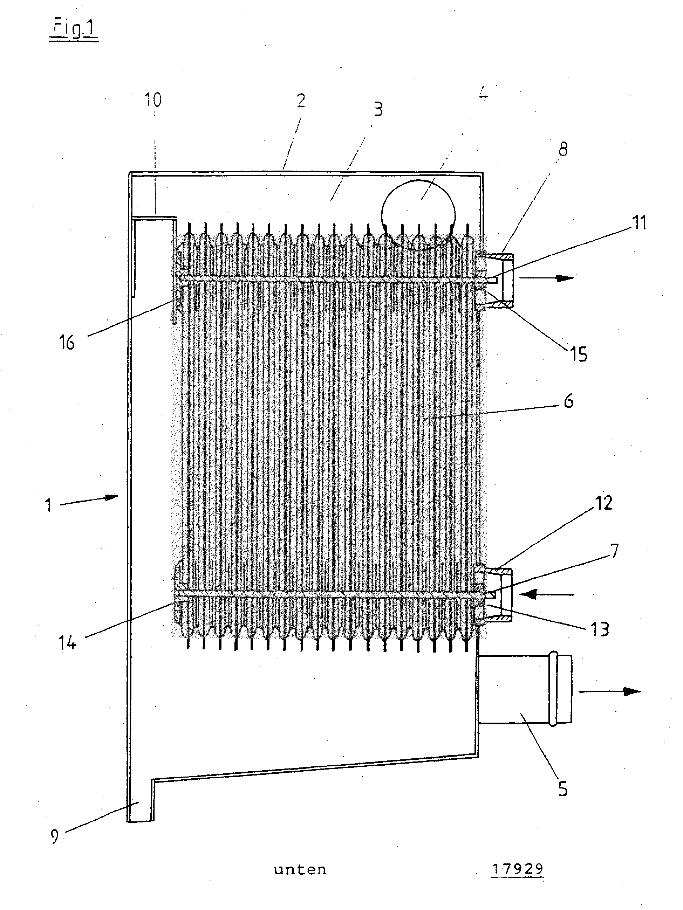

In Fig. 1 ist ein Abschnitt der Abgas von der Brennkammer ableitenden Abgasleitung dargestellt. Dieser Abschnitt ist als Wärmetauscher 1 ausgebildet. Der Wärmetauscher 1 weist ein Gehäuse 2 auf, dessen Innenraum 3 Teil einer Abgasleitung ist. Die Abgasleitung ist nicht weiter dargestellt. Sie führt von dem Brenngasauslaß der Brennkammer eines Heizkessels zum Einlaßstutzen 4 des Gehäuses 2 des Wärmetauschers 1. Es durchströmt den Innenraum 3 des Gehäuses 2 des Wärmetauschers 1, um dann unten aus dem Ausgangsstutzen 5 aus dem Wärmetauscher 1 abzuströmen.

In den Innenraum 3 des Gehäuses 2 des Wärmetauschers 1 ist das Plattenpaket 6 eines Plattenwärmetauschers eingebaut, derart, daß das Plattenpaket 6 von den zugeleiteten Abgasen zwangsweise durchströmt wird. Über einen unteren Anschlußstutzen 7 wird dem Plattenpaket 6 des Wärmetauschers 1 Heizmedium in Richtung des Pfeils zugeführt. Während des Durchflusses durch die einzelnen Tauscherplatten von unten nach oben wird auf das Heizmedium vom im Gegenstrom dazu strömenden Abgas Wärme übertragen. Bei dieser Übertragung wird auch die Kondensationswärme genutzt. Das erwärmte Heizmedium fließt über den oberen Anschlußstutzen 8 zu den Tauscherflächen der Brennkammer des Heizkessels.

Der untere Boden des Gehäuses 2 ist, wie hier dargestellt, schräg ausgeführt, so daß aus dem Plattenpaket 6 abtropfendes Kondenswasser gesammelt und wird und gut abläuft, und zwar über den Abfluß 9, an den sich ein nicht weiter dargestellter Siphon anschließen kann.

Das Gehäuse 2 ist für eine größtmögliche Anzahl von Platten des Plattenpakets 6 ausgelegt. Bei dem hier gezeigten Ausführungsbeispiel ist ein etwas kleineres Plattenpaket 6 eingesetzt. Um dies zu ermöglichen, ist seitlich ein Staublech 10 eingesetzt.

Das Plattenpaket 6 wird zusammengezogen durch zusammenhaltende Plattenelemente, die hier als durch die Platten durchlaufender Zuganker 11 und 12 ausgebildet sind. Jeder Zuganker 11, 12 weist Ankerorgane 13, 14 bzw. 15, 16 auf, mit welchen zumindest endseitig an jeweils äußeren Platten eines Plattenpakets 6 eine Verankerung jedes Zugankers 11, 12 erfolgt.

Jeder Zuganker 11, 12 kann z. B. als Gewindestange ausgebildet sein, die ein Aufschrauben der mit Gewindebohrungen versehenen Ankerorgane 13, 14 bzw. 15, 16 ermöglichen.

Ebenso wie die einzelnen Platten des Plattenpakets 6, ist auch das Gehäuse 2 des Wärmetauschers 1 aus korrosionsbeständigem Stahl hergestellt. Auch die Anschlußstutzen 7 und 8 bzw. Einlaßstutzen 4 und Ausgangsstutzen 5 sind aus korrosionsbeständigem Stahl hergestellt.

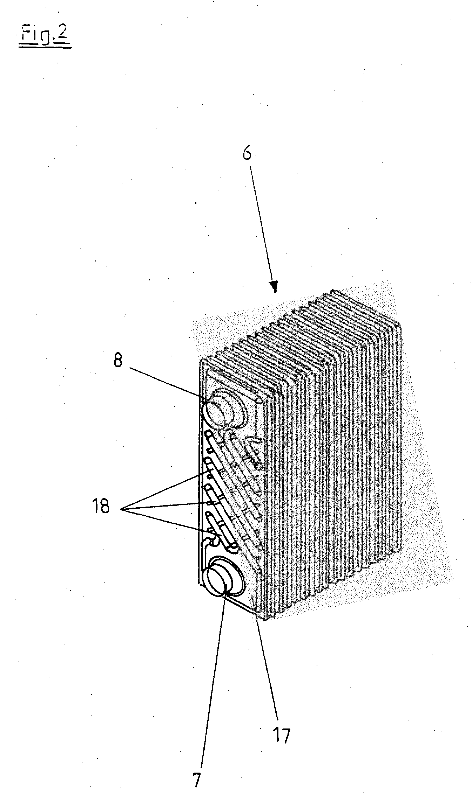

Fig. 2 zeigt eine Ansicht des Plattenpakets 6. Gleiche Bauteile sind mit gleichen Bezugszahlen bezeichnet.

Fig. 2 verdeutlicht, daß jede Platte des Plattenpakets 6, ebenso wie die hier sichtbare äußere Platte, an einander innerhalb des Plattenpakets 6 zugekehrten Tauscherflächen 17 an ihrer von Heizmedium beaufschlagten Seite nach innen in die "W*asserwege"* erhaben vorstehende Leitelemente 18 aufweisen. Diese Leitelemente 18 sind als durch Druckformen bzw. Prägen hergestellte wulstartige Erhebungen ausgebildet, von denen hier lediglich die entsprechende, vertiefte Einprägung sichtbar ist.

## Patentansprüche

1. Heizkessel, mit einem Ölbrenner, mit einer vom Ölbrenner befeuerten Brennkammer, deren Wandflächen in vorbestimmten Bereichen einerseits mit in der Brennkammer vom Ölbrenner erzeugtem Brenngas und andererseits mit dem jeweiligen Heizmedium beaufschlagt sind und mit einer das Brenngas aus der Brennkammer ableitenden Abgasleitung, von der zumindest ein Abschnitt als Plattenwärmetauscher (1) ausgebildet ist, der vom Heizmedium einerseits und von aus der Brennkammer abgeleitetem Brenngas andererseits beaufschlagte Tauscherflächen aufweist, und innerhalb eines Verkleidungsgehäuses des Heizkessels angeordnet ist, wobei der Werkstoff für den Plattenwärmetauscher (1) korrosionsbeständiger Edelstahl ist,
**dadurch gekennzeichnet,**
**dass** der Plattenwärmetauscher (1) als ein im Gegenstrom betriebener Plattenwärmetauscher ausgebildet ist,
**dass** einander innerhalb des Plattenwärmetauschers (1) zugekehrte Tauscherflächen (17) an wenigstens einer ihrer von Heizmedium beaufschlagten Seiten erhabene vorstehende Leitelemente (18) aufweisen, wobei jedes Leitelement (18) eine durch Druckformen hergestellte, wulstartige Erhebung ist, durch die einerseits ein wendel- oder mäanderförmiger Zwangsweg für das Heizmedium und andererseits eine sich kreuzende Form der Heizmediumkanäle ausgebildet ist.

2. Heizkessel nach Anspruch 1, **dadurch gekennzeichnet, dass** der Plattenwärmetauscher (1) wenigstens ein die Platten des Plattenpakets (6) zusammenhaltendes Halteelement aufweist.

## Claims

1. A boiler with an oil burner, with a combustion chamber that is fired by the oil burner and the wall surfaces of which are in predetermined regions acted upon with combustion gas generated in the combustion chamber by the oil burner on the one hand and with the respective heating medium on the other hand, and with an exhaust gas line for discharging the combustion gas from the combustion chamber, wherein at least a section of said exhaust gas line is realized in the form of a plate heat exchanger (1) that is arranged within a protective housing of the boiler and features exchanger surfaces that are acted upon by the heating medium on the one hand and by combustion gas discharged from the combustion chamber on the other hand, and wherein the material for the plate heat exchanger (1) consists of stainless steel,
**characterized in**
**that** the plate heat exchanger (1) is realized in the form of a plate heat exchanger that works on the countercurrent principle, and in
**that** exchanger surfaces (17), which face one another within the plate heat exchanger (1), feature raised, protruding guide elements (18) on at least one of their sides acted upon by the heating medium, wherein
each guide element (18) consists of a bead-like embossment that is produced in a press-forming operation and on the one hand forms a helical or meander-shaped forced path for the heating medium and on the other hand an intersecting shape of the heating medium channels.

2. The boiler according to claim 1, **characterized in that** the plate heat exchanger (1) features at least one holding element for holding together the plates of the plate assembly (6).

## Revendications

1. Chaudière comprenant un brûleur à fioul, comprenant une chambre de combustion chauffée par le brûleur à fioul, dont les surfaces de paroi sont alimentées à des endroits prédéfinis par le gaz combustible produit par le brûleur à fioul dans la chambre de combustion d'une part, et par le fluide caloporteur respectif d'autre part, et comprenant une conduite de gaz d'échappement évacuant le gaz combustible de la chambre de combustion, dont au moins un tronçon est conçu en tant qu'échangeur thermique à plaques (1), qui présente des surfaces d'échangeur alimentées par le fluide caloporteur d'une part et par le gaz combustible évacué de la chambre de combustion d'autre part, et est disposé à l'intérieur d'un caisson d'habillage de la chaudière, sachant que le matériau de l'échangeur thermique à plaques (1) est un acier fin résistant à la corrosion,
**caractérisée en ce**
**que** l'échangeur thermique à plaques (1) est conçu en tant qu'échangeur thermique à plaques entraîné en contre-courant,
**que** des surfaces d'échangeur (17) se tournant le dos à l'intérieur de l'échangeur thermique à plaques (1) présentent des éléments conducteurs (18) en saillie en relief sur au moins un de leurs côtés alimentés par le fluide caloporteur, sachant que
chaque élément conducteur (18) est une élévation en forme de boudin fabriquée par des moules de compression par laquelle un trajet forcé hélicoïdal ou sinueux pour le fluide caloporteur est formé d'une part ainsi qu'une forme en croix des canaux de fluide caloporteur d'autre part.

2. Chaudière selon la revendication 1, **caractérisée en ce que** l'échangeur thermique à plaques (1) présente au moins un élément de fixation tenant ensemble les plaques du paquet de plaques (6).
